# EUROPÄISCHE PATENTSCHRIFT

(11) **EP 2 914 468 B1**
(45) Veröffentlichungstag und Bekanntmachung des Hinweises auf die Patenterteilung: **08.01.2020**
(21) Anmeldenummer: 13786639.8
(22) Anmeldetag: 21.10.2013
(51) Int. Cl.: B60W 50/14, B60W 50/00, G08G 1/133

(54) **FAHRZEUGASSISTENZVORRICHTUNG**
DRIVER ASSISTANCE SYSTEM
DISPOSITIF D'ASSISTANCE INSTALLÉ DANS UN VÉHICULE

(30) Priorität: 31.10.2012 DE 102012219924
(43) Veröffentlichungstag der Anmeldung: 09.09.2015
(73) Patentinhaber: Bayerische Motoren Werke Aktiengesellschaft, 80809 München (DE)
(72) Erfinder: NIEDERMAIER, Bernhard, 81825 Muenchen (DE); RÖLLE, Christopher, 81194 Gröbenzell (DE); STEINBERG, Karl-Ernst, 80992 Muenchen (DE); STRASSBERGER, Markus, 85456 Wartenberg (DE)
(86) Internationale Anmeldenummer: PCT/EP2013/071960
(87) Internationale Veröffentlichungsnummer: WO 2014/067805

(56) Entgegenhaltungen:
- EP-A1- 2 420 985
- WO-A1-2004/108466
- DE-A1-102009 050 056
- DE-A1-102010 038 539
- US-A1- 2007 126 604

## Beschreibung

Die Erfindung betrifft eine Fahrzeugassistenzvorrichtung zum Anzeigen von Informationen für einen Insassen eines Fahrzeugs. Des Weiteren betrifft die Erfindung ein Fahrzeug mit einer derartigen Fahrzeugassistenzvorrichtung und ein System zum Bereitstellen von Daten für eine Fahrzeugassistenzvorrichtung.

Während einer Fahrt mit einem Fahrzeug wechselt das Fahrzeug zwischen verschiedenen räumlichen Zonen beziehungsweise räumlichen Kontexten, die verschiedene Eigenarten oder Besonderheiten aufweisen. Die jedem Fahrtabschnitt zugeordneten Eigenheiten können für einen Fahrer von besonderem Interesse sein. Dies betrifft beispielsweise einen Grenzübertritt in ein anderes Land, die Ankunft an verschiedenen Zielen oder auch multimodale Mobilitätsaktivitäten, das heißt die Benutzung verschiedener Verkehrsmittel.

Es ist wünschenswert, eine Fahrzeugassistenzvorrichtung anzugeben, die beim Eintreten eines bestimmten Zustands des Fahrzeugs beziehungsweise beim Beenden des Zustands oder beim Eintritt oder Verlassen eines räumlichen Bereichs für den Zustand oder den räumlichen Bereich für einen Fahrer spezifische Informationen zur Verfügung stellt. Des Weiteren soll ein Fahrzeug mit einer derartigen Fahrzeugassistenzvorrichtung angegeben werden. Eine weitere Aufgabe der vorliegenden Erfindung ist es, ein System zum Bereitstellen von Daten für eine Fahrzeugassistenzvorrichtung in einem Fahrzeug anzugeben, durch das es ermöglicht wird, spezifische Informationen bezüglich eines bestimmten Zustands des Fahrzeugs oder bezüglich eines bestimmten räumlichen Bereichs, in dem sich ein Fahrzeug gerade befindet, für den Fahrer bereitzustellen.

DE 10 2009 050 056 A1 beschreibt ein Verfahren zum Anzeigen von Informationen in einem Fahrzeug.

Eine Ausführungsform einer Fahrzeugassistenzvorrichtung ist im Patentanspruch 1 angegeben. Eine Ausführungsform eines Fahrzeugs mit einer derartigen Fahrzeugassistenzvorrichtung ist im Patentanspruch 10 angegeben. Im Patentanspruch 11 ist ein System zum Bereitstellen von Daten für eine Fahrzeugassistenzvorrichtung in einem Fahrzeug angegeben.

Gemäß einer Ausführungsform umfasst die Fahrzeugassistenzvorrichtung eine Steuereinrichtung zum Steuern des Anzeigens von Informationen, eine Anzeigeeinrichtung zum Anzeigen der Informationen, eine Positionsbestimmungseinrichtung zum Ermitteln der Position des Fahrzeugs, eine Sensoreinrichtung zum Feststellen eines Zustands des Fahrzeugs und eine Speichereinrichtung mit einem ersten Speicher zur Speicherung von Zuständen des Fahrzeugs und mit einem zweiten Speicher zur Speicherung von Positionen. Die Steuereinrichtung ist derart ausgebildet, dass die Steuereinrichtung den ermittelten Zustand des Fahrzeugs mit den in dem ersten Speicher gespeicherten Zuständen des Fahrzeugs vergleicht und die ermittelte Position des Fahrzeugs mit den in dem zweiten Speicher gespeicherten Positionen des Fahrzeugs vergleicht. Die Steuereinrichtung ist derart ausgebildet, dass die Steuereinrichtung die Informationen auf der Anzeigeeinrichtung anzeigt, wenn die Steuereinrichtung feststellt, dass der ermittelte Zustand des Fahrzeugs mit einem Zustand, der in dem ersten Speicher gespeichert ist, übereinstimmt und/oder die ermittelte Position des Fahrzeugs mit einer Position, die in dem zweiten Speicher gespeichert ist, übereinstimmt
- wobei die Steuereinrichtung erste der Informationen auf der Anzeigeeinrichtung anzeigt, wenn die Steuereinrichtung feststellt, dass sich der ermittelte Zu stand des Fahrzeugs von einem Zustand, der nicht in dem ersten Speicher gespeichert ist, in den Zustand, der in dem ersten Speicher gespeichert ist, verändert, und/oder wenn die Steuereinrichtung feststellt, dass sich die ermittelte Position des Fahrzeugs von einer Position, die nicht in dem zweiten Speicher gespeichert ist, zu der Position, die in dem zweiten Speicher gespeichert ist, verändert,
- wobei die Steuereinrichtung zweite von den ersten Informationen verschiedene Informationen auf der Anzeigeeinrichtung anzeigt, wenn die Steuereinrichtung feststellt, dass sich der ermittelte Zustand des Fahrzeugs von dem Zustand, der in dem ersten Speicher gespeichert ist, in den Zustand, der nicht in dem ersten Speicher gespeichert ist, verändert, und/oder wenn die Steuereinrichtung feststellt, dass sich die Position des Fahrzeugs von der Position, die in dem zweiten Speicher gespeichert ist, zu der Position, die nicht in dem zweiten Speicher gespeichert ist, verändert.

Die Fahrzeugassistenzvorrichtung stellt einen Mobilitätsdienst zur Verfügung, der einen Fahrer in proaktiver Weise systeminitiiert beim Wechsel zwischen zwei verschiedenen Mobilitätsabschnitten, in denen unterschiedliche Regeln, Besonderheiten oder Eigenarten gelten oder in denen unterschiedliche Informationen für den Fahrer von Interesse sind, unterstützt. Von der Fahrzeugassistenzvorrichtung können beim Eintreten in eine räumliche Zone oder beim Verlassen der räumlichen Zone unterschiedliche Informationen bereitgestellt werden. Auf der Anzeigeeinrichtung der Fahrzeugassistenzvorrichtung kann beispielsweise beim Eintreten in einen bestimmten Fahrabschnitt ein Begrüßungs-Menü mit wichtigen den Fahrabschnitt betreffenden Informationen angezeigt werden. Beim Verlassen des Streckenabschnitts kann ein Verabschiedungs-Menü mit Informationen, die beim Verlassen des Streckenabschnitts von Interesse sein können, angezeigt werden.

Die Interaktion mit der Fahrzeugassistenzvorrichtung kann auf verschiedenen Geräten im Fahrzeug erfolgen. Die Anzeigeeinrichtung kann beispielsweise ein Display, das zum Infotainment-System des Fahrzeugs gehört, ein frei programmierbares Display, das im Kombiinstrument des Fahrzeugs angeordnet ist, oder Head-up-Display sein. Die Ein- beziehungsweise Ausgabe kann mittels verschiedener Ein-/Ausgabemodalitäten, beispielsweise optisch oder akustisch, erfolgen. Das Begrüßungs-Menü und das Verabschiedungs-Menü können mit ihren jeweiligen Informationen sowohl auf der gleichen Anzeigeeinrichtung als auch auf unterschiedlichen Anzeigeeinrichtungen oder auf einer Anzeigeeinrichtung kombiniert dargestellt werden.

Ein Wechsel zwischen Fahrabschnitten beziehungsweise ein Wechsel des Mobilitätskontexts findet insbesondere in den folgenden Situationen statt: zu Beginn der Mobilität, das heißt vor Beginn der eigentlichen Fahrt, beispielsweise von zuhause aus, von einem Hotel aus oder von der Arbeitsstelle aus; beim Wechsel des Fortbewegungsmittels, beispielsweise beim Wechsel zwischen Auto, Fahrrad, Bus, Bahn, Mietwagen, Autozug, Fähre, Flugzeug, Schiff oder dem Gehen zu Fuß; bei Unterbrechungen einer Fahrt, insbesondere bei Pausen/Rast, beim Tanken, bei der Durchführung von Serviceleistungen oder längeren Wartezeiten; bei Änderungen der kognitiven Anforderungen, beispielsweise beim Übergang zum automatisierten Fahren; beim Eintritt in Regionen mit unterschiedlichen rechtlichen Regelungen, insbesondere beim Grenzübertritt oder beim Übertritt in Umweltzonen und Citymautzonen; beim Eintritt in privat organisierte Bereiche, insbesondere beim Einfahren auf Parkplätze, in Parkhäuser, in Tiefgaragen oder auf Firmengelände oder beim Verlassen derselben und beim Ende der Fahrt. Gemäß einer Ausführungsform umfasst ein System zum Bereistellen von Daten für eine Fahrzeugassistenzvorrichtung in einem Fahrzeug ein Fahrzeug mit einer Fahrzeugassistenzvorrichtung nach einer der in den Patentansprüchen 1 bis 9 genannten Ausführungsformen und eine bezüglich des Fahrzeugs externe Einrichtung zum Bereitstellen der Informationen für die Fahrzeugassistenzvorrichtung des Fahrzeugs. Die Einrichtung zum Bereitstellen der Informationen weist eine Speichereinrichtung zum Speichern von Daten auf. Die Einrichtung zum Bereitstellen der Informationen weist eine Steuereinrichtung zum Auswählen der Informationen aus den in der Speichereinrichtung gespeicherten Daten auf. Die Steuereinrichtung ist dazu ausgebildet, die Informationen aus den in der Speichereinrichtung gespeicherten Daten in Abhängigkeit von dem von der Fahrzeugassistenzvorrichtung ermittelten Zustand des Fahrzeugs und/oder in Abhängigkeit von der von der Fahrzeugassistenzvorrichtung ermittelten Position des Fahrzeugs auszuwählen. Die Einrichtung zum Bereitstellen der Informationen sendet die Informationen an die Fahrzeugassistenzvorrichtung des Fahrzeugs, wenn die Steuereinrichtung der Fahrzeugassistenzvorrichtung die Anfrage zum Senden der Informationen an die externe Einrichtung gestellt hat.

Die Erfindung wird im Folgenden anhand von Figuren, die Ausführungsbeispiele der vorliegenden Erfindung zeigen, näher erläutert. Es zeigen:
- Figur 1: eine Ausführungsform eines Fahrzeugs mit einer Fahrzeugassistenzvorrichtung zum Bereitstellen von Informationen für einen Fahrer des Fahrzeugs,
- Figur 2: einen Anzeige von Informationen eines Begrüßungs-Menüs auf einer Anzeigeeinrichtung,
- Figur 3: eine Anzeige von Informationen eines Verabschiedungs-Menüs,
- Figur 4: eine Ausführungsform eines Systems zum Bereitstellen von Daten für eine Fahrzeugassistenzvorrichtung in einem Fahrzeug.

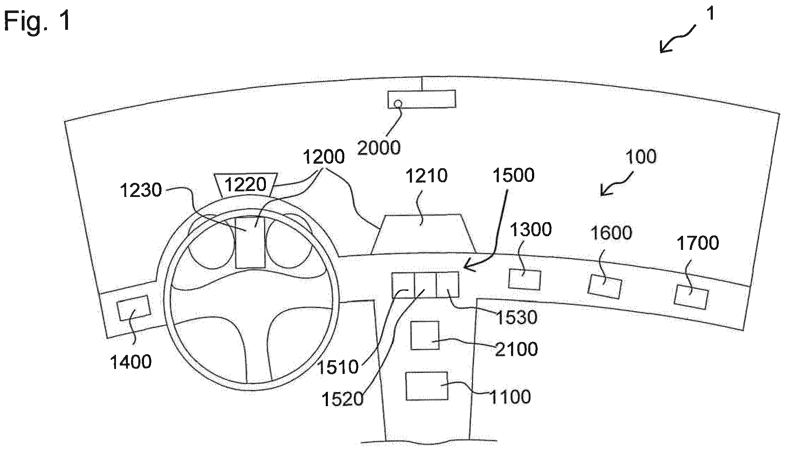

Figur 1 zeigt das Innere eines Fahrzeugs 1 mit einer Ausführungsform einer Fahrzeugassistenzvorrichtung 100 zum Bereitstellen von Informationen für den Fahrer des Fahrzeugs in Abhängigkeit vom Aufenthalt des Fahrzeugs in unterschiedlichen räumlichen Zonen. Die Fahrzeugassistenzvorrichtung 100 umfasst eine Steuereinrichtung 1100 zum Steuern des Anzeigens der Informationen auf einer Anzeigeeinrichtung 1200 zum Anzeigen der Informationen. Die Anzeigeeinrichtung kann als zentrales Display 1210 eines Infotainment-Systems des Fahrzeugs, als ein frei programmierbares Display 1220 im Kombiinstrument des Fahrzeugs oder als ein Head-up-Display 1230 des Fahrzeugs ausgebildet sein.

Die Fahrzeugassistenzvorrichtung 100 umfasst des Weiteren eine Positionsbestimmungseinrichtung 1300 zum Ermitteln der Position des Fahrzeugs 1, mindestens eine Sensoreinrichtung 1400 zum Feststellen eines Zustands des Fahrzeugs 1 und eine Speichereinrichtung 1500 mit einem Speicher 1510 zum Speichern von Zuständen des Fahrzeugs und mit einem Speicher 1520 zur Speicherung von Positionen des Fahrzeugs.

Die Steuereinrichtung 1100 ist derart ausgebildet, dass sie die von der mindestens einen Sensoreinrichtung 1400 ermittelten Zustände des Fahrzeugs mit den in dem Speicher 1510 gespeicherten Zuständen des Fahrzeugs vergleicht und/oder die von der Positionsbestimmungseinrichtung 1300 ermittelte Position des Fahrzeugs 1 mit dem in dem Speicher 1520 gespeicherten Positionen des Fahrzeugs vergleicht. Die Steuereinrichtung 1100 zeigt die Informationen auf der Anzeigeeinrichtung 1200 an, wenn die Steuereinrichtung feststellt, dass der ermittelte Zustand des Fahrzeugs 1 mit einem Zustand, der in dem Speicher 1510 gespeichert ist, übereinstimmt und/oder die ermittelte Position des Fahrzeugs 1 mit einer Position, die in dem Speicher 1520 gespeichert ist, übereinstimmt.

In dem Zustands-Speicher 1510 sind beispielsweise die Zustände "Fahrertür schließen; Zündung einschalten" gespeichert. Wenn der Fahrer beispielsweise die Fahrertür des Fahrzeugs öffnet, in das Fahrzeug einsteigt, die Tür wieder schließt und die Zündung einschaltet, ermittelt die Sensoreinrichtung 1400 diese Zustände und vergleicht sie mit den in dem Zustands-Speicher 1510 gespeicherten Zuständen. Wenn die Steuereinrichtung 1100 feststellt, dass in Zustands-Speicher 1510 der ermittelte Zustand "Fahrertür schließen; Zündung einschalten" gespeichert ist, zeigt die Steuereinrichtung 1100 Informationen, die diesem Zustand zugeordnet sind an. Beispielsweise wird ein Begrüßungs-Menü von Informationen vor Beginn einer Fahrt auf der Anzeigeeinrichtungen 1200 angezeigt.

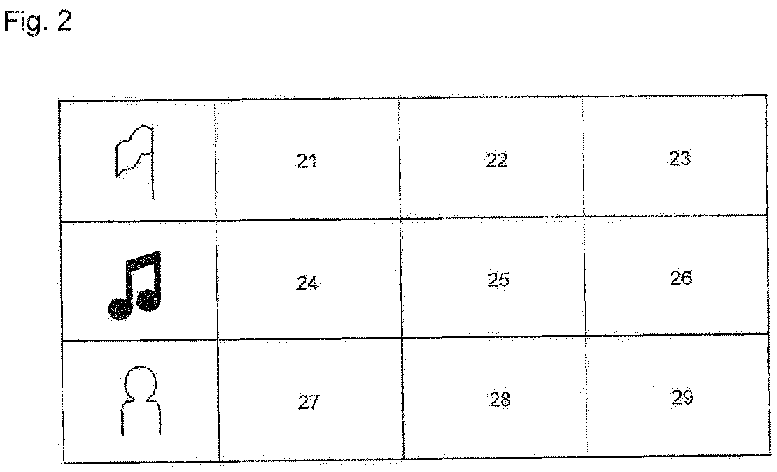

Figur 2 zeigt beispielhaft Informationen, die in dem Begrüßungs-Menü vor Beginn einer Fahrt auf der Anzeigeeinrichtung 1200 angezeigt werden können. In der ersten Bildschirmzeile kann beispielsweise eine Auswahl von verschiedenen Zielorten 21, 22 und 23 angegeben werden, die der Fahrer oft oder zuletzt angefahren hat oder die der Fahrer üblicherweise zu einer bestimmten Zeit anfährt. In der zweiten Bildschirmzeile kann eine Auswahl von Unterhaltungsvarianten während der anstehenden Fahrt angezeigt werden. Beispielsweise kann der Fahrer per Knopfdruck auf das Display auswählen, ob er durch Drücken auf ein Feld 24 Radio hören möchte, durch Drücken auf das Feld 25 des Bildschirms ein bestimmtes Musikstück oder eine CD hören möchte oder durch Drücken auf ein Bildschirmfeld 26 ein Video abspielen möchte.

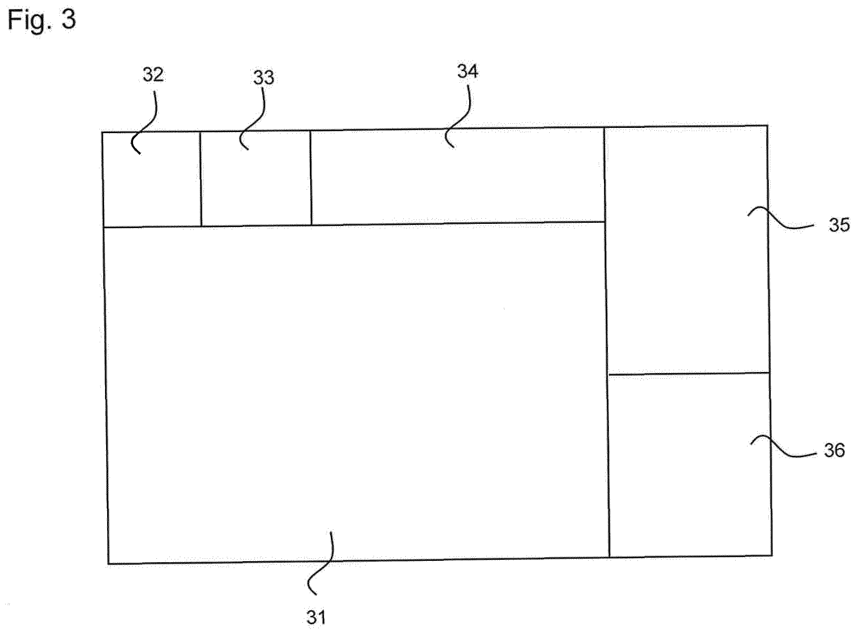

Figur 3 zeigt beispielhaft Informationen, die von der Steuereinrichtung 1100 auf der Anzeigeeinrichtung 1200 in einem Verabschiedungs-Menü angezeigt werden, beispielsweise am Ende einer Fahrt, wenn das Fahrzeug an einem Ort abgestellt wird. Im vorliegenden Beispiel wird dem Fahrer auf einem Bildausschnitt 31 der Anzeigeeinrichtung 1200 eine Straßenkarte angezeigt, die den Weg von einer Parkposition zu einem Zielort anzeigt. Des Weiteren kann die von Beginn der Reise zurückgelegte Entfernung in einem Bildausschnitt 32 und die dafür benötigte Zeit in einem Bildausschnitt 33 angezeigt werden. In einem Bildausschnitt 34 wird der Fahrer über den technischen Zustand des Fahrzeugs informiert, indem bei einem festgestellten fehlerfreien Zustand beispielsweise die Information "Alle technischen System OK" im Bildfeld 34 eingeblendet wird. In einem Bildausschnitt 35 wird der Fahrer beispielsweise darauf hingewiesen, dass an der Position an der das Auto momentan steht, das Ziehen eines Parktickets notwendig ist. Im Bildausschnitt 36 werden Informationen bezüglich der Abfahrtszeit von Bussen einer in der Nähe gelegenen Bushaltestelle angezeigt.

Die Steuereinrichtung 1100 kann erste der Informationen auf der Anzeigeeinrichtung anzeigen, wenn die Steuereinrichtung feststellt, dass sich der ermittelte Zustand des Fahrzeugs von einem Zustand, der nicht in dem Speicher 1510 gespeichert ist, in einen Zustand, der in dem Speicher 1510 gespeichert ist, verändert. Des Weiteren kann die Steuereinrichtung 1100 Informationen auf der Anzeigeeinrichtung anzeigen, wenn die Steuereinrichtung feststellt, dass sich die ermittelte Position des Fahrzeugs von einer Position, die nicht in dem Speicher 1520 gespeichert ist, zu einer Position, die in dem Speicher 1120 gespeichert ist, verändert. Die ersten Informationen gehören beispielsweise zu einem Begrüßungs-Menü, das auf der Anzeigeeinrichtung angezeigt wird, wenn das Fahrzeug in einen räumlichen Bereich einfährt, dessen Positionskoordinaten in dem Speicher 1520 gespeichert sind.

Die Steuereinrichtung 1100 kann zweite von den ersten Information verschiedene Informationen auf der Anzeigeeinrichtung anzeigen, wenn die Steuereinrichtung 1100 feststellt, dass sich der ermittelte Zustand des Fahrzeugs von einem Zustand, der in dem Speicher 1510 gespeichert ist, in einen Zustand, der nicht in dem Speicher 1510 gespeichert ist, verändert.

Des Weiteren kann die Steuereinrichtung 1100 die zweiten Informationen anzeigen, wenn die Steuereinrichtung 1100 feststellt, dass sich die Position des Fahrzeugs von einer Position, die in dem Speicher 1520 gespeichert ist zu einer Position, die nicht im Speicher 1520 gespeichert ist, verändert. Die zweiten Informationen gehören beispielsweise zu einem Verabschiedungs-Menü, das auf der Anzeigeeinrichtung angezeigt wird, wenn das Fahrzeug einen räumlichen Bereich verlässt, dessen Positionskoordinaten in dem Speicher 1520 gespeichert sind.

Die Fahrzeugassistenzvorrichtung 100 kann eine Empfangseinrichtung 1600 zum Empfangen von Daten, die von einer externen Einrichtung außerhalb des Fahrzeugs bereitgestellt werden, umfassen. Die Steuereinrichtung 1100 zeigt die von der externen Einrichtung bereitgestellten Daten auf der Anzeigeeinrichtungen 1200 an, wenn die Steuereinrichtung 1100 feststellt, dass der ermittelte Zustand des Fahrzeugs 1 mit einem Zustand, der in dem Speicher 1510 gespeichert ist, übereinstimmt und/oder eine von der Positionsbestimmungseinrichtung 1300 ermittelte Position des Fahrzeugs 1 mit einer Position, die in dem Speicher 1520 gespeichert ist, übereinstimmt.

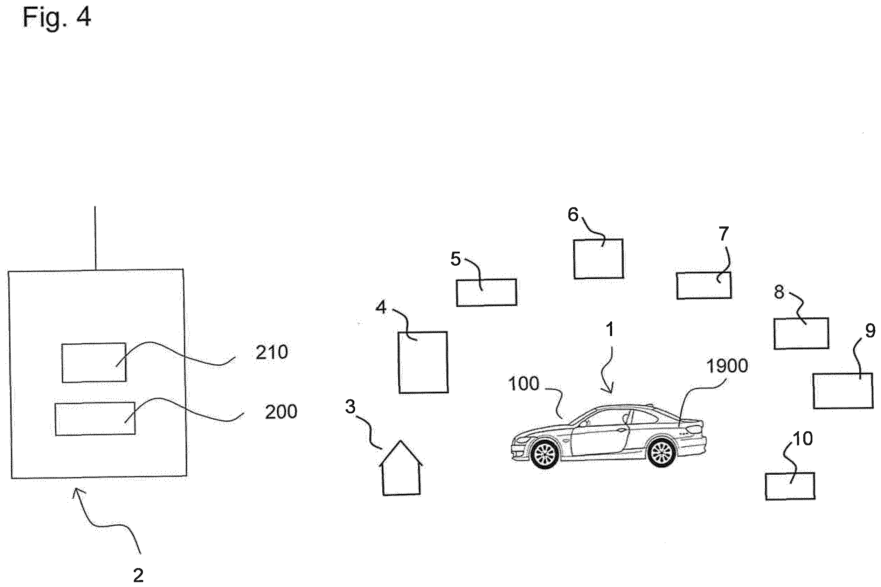

Zur Verdeutlichung zeigt Figur 4 ein Szenario mit einem Fahrzeug 1, das eine Fahrzeugassistenzvorrichtung 100 umfasst. Die Empfangseinrichtung 1600 kann die Daten, die als Informationen des Begrüßungs-Menüs beziehungsweise als Informationen des Verabschiedungs-Menüs auf der Anzeigeeinrichtung 1200 dargestellt werden, von einer Vielzahl von externen Einrichtungen empfangen. Zu diesen externen Einrichtungen gehört beispielsweise eine Zentrale beziehungsweise ein Backend 2 des Fahrzeugherstellers, eine Wohnung beziehungsweise ein Haus 3 des Fahrers, ein privates oder öffentliches Unternehmen 4, beispielsweise die Arbeitsstätte des Fahrers, ein Hotel/Restaurant 5, ein Dienstleister 6 zum Bereitstellen von Serviceleistungen für das Fahrzeug, insbesondere eine Tankstelle, ein Geschäft 7, beispielsweise ein Supermarkt, ein Unternehmen 8 des öffentlichen Personennahverkehr, beispielsweise ein Nahverkehrs-Bus/Bahn-Unternehmen oder ein Flughafenbetreiber, ein Parkplatz/Parkhaus 9, oder eine Mietwagen-/Taxizentrale 10. Es sei darauf hingewiesen, dass die aufgezählten externen Einrichtungen lediglich Beispiele für externe Datenquellen der Fahrzeugassistenzvorrichtung 100 sind und daher nicht einschränkend zu verstehen sind.

Zum Erhalten der Informationen von einer der externen Einrichtungen umfasst die Fahrzeugassistenzvorrichtung 100 eine Sendeeinrichtung 1700 zum Senden einer Anfrage an eine externe Einrichtung zum Senden von Daten an die Fahrzeugassistenzvorrichtung 100. Die Steuereinrichtung 1100 ist derart ausgebildet, dass die Steuereinrichtung einer Anfrage zum Senden der Daten an eine der externen Einrichtungen sendet, wenn die Steuereinrichtung 1100 feststellt, dass sich der von der Sensoreinrichtung 1400 ermittelte aktuelle Zustand des Fahrzeugs 1 von einem Zustand, der nicht in dem Speicher 1510 gespeichert ist, in einen Zustand, der in dem Speicher 1510 gespeichert ist, verändert und/oder wenn die Steuereinrichtung 1100 feststellt, dass die von der Positionsbestimmungseinrichtung 1300 ermittelte aktuelle Position des Fahrzeugs sich von einer Position, die nicht in dem Speicher 1520 gespeichert ist, zu einer Position, die in dem Speicher 1520 gespeichert ist, verändert. Wenn die Informationen von einer der externen Einrichtungen 2, ..., 10 bezogen werden sollen, kann die Sendeeinrichtung somit beim Feststellen des Eintritts eines bestimmten Zustands oder beim Feststellen des Einfahrens in einen definierten räumlichen Bereich eine Anfrage an eine der externen Einrichtungen zum Senden von Informationen zum Anzeigen in dem Begrüßungs-Menüs senden.

Des Weiteren kann die Steuereinrichtung 1100 einer Anfrage zum Senden der Daten an eine der externen Einrichtungen 2, ..., 10 senden, wenn die Steuereinrichtung 1100 feststellt, dass sich der von der Sensoreinrichtung 1400 ermittelte aktuelle Zustand des Fahrzeugs 1 von einem Zustand, der in dem Speicher 1510 gespeichert ist, in einen Zustand, der nicht in dem Speicher 1510 gespeichert ist, verändert und/oder wenn die Steuereinrichtung 1100 feststellt, dass sich die von der Positionsbestimmungseinrichtung 1300 ermittelte aktuelle Position des Fahrzeugs von einer Position, die in dem Speicher 1520 gespeichert ist, zu einer Position, die nicht in dem Speicher 1520 gespeichert ist, verändert. Wenn die Informationen von einer der externen Einrichtungen 2, ..., 10 bezogen werden sollen, kann die Sendeeinrichtung somit beim Feststellen des Beendens eines bestimmten Zustands oder beim Feststellen des Verlassens eines definierten räumlichen Bereichs eine Anfrage an eine der externen Einrichtungen zum Senden von Informationen zum Anzeigen in dem Verabschiedungs-Menü senden.

Die externen Einrichtungen 3, ..., 10 können unmittelbar mit der Fahrzeugassistenzvorrichtung 100 des Fahrzeugs kommunizieren oder können alternativ dazu die von ihnen bereitgestellten Informationen zunächst an die Zentrale/das Backend 2 des Fahrzeugherstellers senden. Die Fahrzeugassistenzvorrichtung 100 empfängt dann die auf der Anzeigeeinrichtung 1200 anzuzeigenden Informationen des Begrüßungs-Menüs oder des Verabschiedungs-Menüs von der Zentrale/dem Backend 2.

Die externe Einrichtung 2 kann eine Speichereinrichtung 200 zum Speichern von einer Vielzahl von Daten aufweisen. Wenn die Fahrzeugassistenzvorrichtung 100 die Anfrage zum Senden der Daten gestellt hat, wählt eine Steuereinrichtung 210 der Einrichtung 2 in Abhängigkeit von dem von der Fahrzeugassistenzvorrichtung 100 festgestellten Zustand des Fahrzeugs und/oder der von der Fahrzeugassistenzvorrichtung festgestellten Position des Fahrzeugs Daten aus der Speichereinrichtung 200 aus und die Einrichtung 2 überträgt diese an die Fahrzeugassistenzvorrichtung 100. Aus den übertragenen Daten generiert die Steuereinrichtung 1100 die Informationen, die auf der Anzeigeeinrichtung 1200 dargestellt werden. Alternativ dazu können die externen Einrichtungen 3, ..., 10 die von ihnen bereitgestellten Daten auch unmittelbar an die Fahrzeugassistenzvorrichtung senden.

Die von den externen Einrichtungen 3, ..., 10 bereitgestellten Daten können den Zustand der jeweiligen externen Einrichtung kennzeichnen. Im Folgenden werden einige Beispiele von möglichen anzuzeigenden Informationen angegeben, die die Steuereinrichtung 1100 aus den von den externen Einrichtungen 3, ..., 10 bereitgestellten Daten erzeugen kann.

Wenn von der Steuereinrichtung 1100 festgestellt wird, dass der Fahrer des Fahrzeugs zu sein Haus/seine Wohnung 3 verlässt, kann in dem Verabschiedungs-Menü ein Status und Aktionen betreffend die Hausautomatisierung angezeigt werden. Ebenso können bei Annäherung an den häuslichen Bereich 3 indem Begrüßungs-Menü der Status der Hausautomatisierung angezeigt werden. Des Weiteren können beispielsweise Kurzvideos von Besuchern, die am Haus/der Wohnung 3 während der Abwesenheit des Fahrers geklingelt haben, Benachrichtigungen über Zustellversuchen von Paketen/Briefen, elektronische Nachrichten/Notizen anderer Bewohner oder automatisch aufgezeichnete Beiträge verschiedener Medien angezeigt werden.

Wenn von der Steuereinrichtung 1100 festgestellt wird, dass sich der Fahrer des Fahrzeugs seiner Arbeitsstätte 4 nähert, können von der Arbeitsstätte Informationen bezogen werden, die in dem Begrüßungs-Menü angezeigt werden und beispielsweise wesentliche Aufgaben des Tages, elektronische Mitteilungen von Kollegen, Terminübersichten oder Informationen betreffend ein Fuhrparkmanagement betreffen. Wenn die Steuereinrichtung 1100 feststellt, dass der Fahrer nach dem Einsteigen in das Fahrzeug den räumlichen Bereich der Arbeitsstätte verlassen will, werden von der Steuereinrichtung 1100 auf der Anzeigeeinrichtung 1200 ein Verabschiedungs-Menü mit Informationen betreffend die heutige Arbeitszeit, Überstunden, Ausstempelhinweise oder die am nächsten Tag anstehenden Termine angezeigt.

Wenn von der Steuereinrichtung 1100 festgestellt wird, dass sich das Fahrzeug einem Hotel/Restaurant 5 nähert, werden in dem Begrüßungs-Menü allgemeine Hotel-/Restaurantinformationen, Informationen zu Lage von/Zufahrt zu Parkmöglichkeiten, Informationen zu Öffnungszeiten der Rezeption, zur Zimmerbelegung, zur Speisekarte oder zu Bezahlmöglichkeiten angezeigt. Wenn die Steuereinrichtung 1100 nach Auswerten der von der Positionsbestimmungseinrichtung 1300 und der Sensoreinrichtung 1400 ermittelten Daten feststellt, dass der Fahrer den Restaurant-/Hotelbereich verlassen möchte, werden in dem Verabschiedungs-Menü Informationen zur Rechnung, zur Bezahlung der Tiefgarage oder zur Hotelbewertung angezeigt.

Wenn von der Steuereinrichtung 1100 festgestellt wird, dass sich das Fahrzeug einer Tankstelle 6 nähert, der Fahrer dort anhält und der Motor abgeschaltet wird, werden von der Steuereinrichtung 1100 in dem Begrüßungs-Menü Informationen betreffend einen Lageplan von Zapfsäulen, freie Zapfsäulen, Preisinformationen, das Warensortiment der Tankstelle oder Bezahlmöglichkeiten an der Tankstelle auf der Anzeigeeinrichtung 1200 angezeigt. Wenn von der Steuereinrichtung 1100 durch Auswerten der Sensoreinrichtung 1400 festgestellt wird, dass der Fahrer nach einer Betankung die Tankstelle wieder verlassen möchte, werden in dem Verabschiedungs-Menü auf der Anzeigeeinrichtung Informationen zur Tankfüllung, dem Preis, der getankten Spritmenge und eine Bewertungsmöglichkeit der Tankstelle angezeigt.

Wenn die Steuereinrichtung 1100 feststellt, dass sich das Fahrzeug einem Geschäft 7 nähert und beispielsweise auf dem Parkplatz des Geschäfts anhält, werden in dem Begrüßungs-Menü auf der Anzeigeeinrichtung Informationen betreffend Öffnungszeiten des Geschäfts, Vouchers/Coupons des Geschäfts, ein schwarzes Brett des Geschäfts oder Abteilungen des Geschäfts angezeigt. Wenn die Steuereinrichtung 1100 durch Auswerten der Positionsbestimmungseinrichtung 1300 und der Sensoreinrichtung 1400 feststellt, dass der Fahrer nach getätigtem Einkauf auf dem Parkplatz des Geschäfts wieder in das Fahrzeug einsteigt, die Fahrertür schließt und die Zündung einschaltet, kann von der Steuereinrichtung darauf geschlossen werden, dass der Fahrer den räumlichen Bereich des Geschäfts 7 verlassen möchte. In diesem Fall werden vom Backend 2 oder unmittelbar vom Geschäft 7 Daten empfangen, die Informationen für das Verabschiedungs-Menü enthalten. Die auf der Anzeigeeinrichtung angezeigt Informationen können eine Übersicht über den Einkauf, einen Abgleich mit dem Einkaufszettel oder Sonderinformationen über das Geschäft enthalten.

Wenn die Steuereinrichtung 1100 feststellt, dass sich das Fahrzeug 1 einem Unternehmen des öffentlichen Personennahverkehrs 8 nähert und das Fahrzeug dort anhält, zeigt die Steuereinrichtung in dem Begrüßungs-Menü auf der Anzeigeeinrichtung Informationen betreffend eine Übersicht der Haltestellen, des Bahnhofs oder des Flughafens an. Des Weiteren können als Begrüßungs-Informationen die nächsten Verbindungen, die Zeit bis zur Abfahrt, aktuelle Abfahrtszeiten der einzelnen Linien, Fahrpreise, Bezahlmöglichkeiten und -hinweise, spezielle Hinweise für Ausländer oder sonstige Besonderheiten, beispielsweise Zugausfälle, Störungen auf der Strecke, Schienenersatzverkehr oder Gleisänderungen, angezeigt werden. Wenn die Steuereinrichtung das Verlassen des räumlichen Bereichs einer Haltestelle, eines Bahnhofs oder eines Flughafens feststellt, können in einem Verabschiedungs-Menü Informationen betreffend die gesparte Zeit, den vermiedenen Schadstoffausstoß des eigenen Fahrzeugs und das bezahlte Geld für die Bus-/Bahnfahrt oder den Flug angezeigt werden.

Wenn die Steuereinrichtung 1100 feststellt, dass sich das Fahrzeug 1 einem Parkplatz oder Parkhaus 9 nähert, wird von der Fahrzeugassistenzvorrichtung 100 beispielsweise eine Anfrage an das Backend 2 zum Bereitstellen von Informationen zum Anzeigen im Begrüßungs-Menü gestellt. Das Backend 2 sendet daraufhin Daten an die Fahrzeugassistenzvorrichtung 100, aus denen die Steuereinrichtung 1100 Informationen betreffend einen Plan des Parkplatzes/Parkhauses, die Kennzeichnung von freien Flächen, die maximale Parkdauer, die Preise, eine Abfrage einer voraussichtlichen Parkdauer, eine Abschätzung des möglicherweise zu zahlenden Preises, Hinweise auf besondere Parkplätze oder Hinweise zu speziellen Dienstleistungen des Parkplatz-/Parkhaubetreibers generiert. Wenn die Steuereinrichtung 1100 feststellt, dass der Fahrer des Fahrzeugs den Parkplatz/das Parkhaus verlassen möchte, werden von der Steuereinrichtung 1100 auf der Anzeigeeinrichtung Informationen betreffend die Parkdauer und den bezahlten Preis angezeigt.

Wenn die Steuereinrichtung 1100 feststellt, dass sich das Fahrzeug einer Mietwagenzentrale oder einem Taxistand 10 nähert und der Fahrer das Fahrzeug dort anhält, werden von der Steuereinrichtung als Begrüßungs-Informationen die voraussichtliche Ankunftszeit eines Taxis, der Standort des Taxis, der geschätzte Fahrpreis, die geschätzte Reisezeit im Taxi, ein Bild des Fahrers oder Nutzungshinweise für einen Mietwagen angezeigt. Wenn die Steuereinrichtung 1100 feststellt, dass der Fahrer nach einer längeren Parkzeit in der Nähe der Mietwagenzentrale oder dem Taxistand wieder in das Fahrzeug einsteigt, werden von der Steuereinrichtung 1100 auf der Anzeigeeinrichtung Informationen eines Verabschiedungs-Menüs angezeigt. Diese Informationen können beispielsweise den Fahr-/Mietpreis, ein Vorreservieren des nächsten Taxis/Mietwagens, Besonderheiten der Fahrt, gesammelte Bonusmeilen oder Rückgabehinweise für einen Mietwagen betreffen.

Gemäß einer weiteren Ausführungsform kann die Steuereinrichtung 1100 der Fahrzeugassistenzvorrichtung derart ausgebildet sein, dass Daten, die von der Sensoreinrichtung 1400 des Fahrzeugs bereitgestellt werden, auf der Anzeigeeinrichtung 1200 angezeigt werden, wenn die Steuereinrichtung 1100 feststellt, dass der ermittelte Zustand des Fahrzeugs 1 mit dem Zustand, der in dem Speicher 1510 gespeichert ist, übereinstimmt und/oder die ermittelte Position des Fahrzeugs 1 mit der Position, die in dem Speicher 1520 gespeichert ist, übereinstimmt. Somit stellt die Steuereinrichtung einem Fahrer nicht nur Informationen bereit, die sie von der Zentrale/Backend 2 oder einer der externen Einrichtungen 3, ..., 10 empfängt, sondern auch Informationen, die sie aus den Sensordaten des Fahrzeugs erzeugt.

Die Fahrzeugassistenzvorrichtung 100 umfasst des Weiteren eine Eingabeeinrichtung 1800 zum Programmieren der Steuereinrichtung 1100 zur Anzeige von Daten, die beispielsweise den Zustand von Komponenten des Fahrzeugs oder den Zustand von nicht zum Fahrzeug gehörenden Objekten oder den Zustand der Umgebung des Fahrzeugs oder das Auftreten von Ereignissen betreffen. Die Steuereinrichtung 1100 ist derart programmierbar ausgebildet, dass die Steuereinrichtung in Abhängigkeit von der Programmierung der Steuereinrichtung die Daten auf der Anzeigeeinrichtung 1200 anzeigt, wenn die Steuereinrichtung 1100 feststellt, dass der ermittelte Zustand des Fahrzeugs 1 mit dem Zustand, der in dem Speicher 1510 gespeichert ist, übereinstimmt und/oder die ermittelte Position des Fahrzeugs mit der Position, die in dem Speicher 1520 gespeichert ist, übereinstimmt.

Somit kann ein Nutzer die Informationen, die er im Begrüßungs-Menü oder im Verabschiedungs-Menü eines bestimmten Fahrzeugzustands oder eines bestimmten räumlichen Bereichs erhält, selbst festlegen. Figur 1 zeigt beispielsweise in der dritten Bildschirmzeile eines Begrüßungs-Menüs, das unmittelbar nach dem Einschalten der Zündung auf der Anzeigeeinrichtung 1200 angezeigt wird, in einem Bildschirmfeld 27 Informationen bezüglich von Kontaktaufnahmeversuchen von Personen, die den Fahrer beispielsweise vergeblich versucht haben auf seinem Smartphone anzurufen, oder in einem Bildschirmfeld 28 Informationen bezüglich Personen, die der Fahrer in der nächsten Zeit gerne selbst anrufen möchte, oder in einem Feld 29 des Bildschirms Informationen betreffend Personen, von denen der Fahrer eine noch nicht gelesene E-Mail erhalten hat.

Die Steuereinrichtung 1100 kann von einem Nutzer auch derart programmiert werden, dass die Anzeige von Informationen, die üblicherweise beim Feststellen eines bestimmten Fahrzeugzustands und/oder einer bestimmten Position des Fahrzeugs auf der Anzeigeeinrichtung angezeigt würden, unterdrückt werden. Wenn die Arbeitsstelle des Fahrers beispielsweise in der Nähe eines Bahnhofs liegt, kann der Fahrer durch geeignete Programmierung der Steuereinrichtung 1100 verhindern, dass bei jedem Abstellen des Fahrzeugs auf dem Parkplatz seines Büros die von einer nahegelegenen Bahnhofseinrichtung bereitgestellten Informationen in einem Begrüßungs-Menü angezeigt werden.

Die Fahrzeugassistenzvorrichtung kann des Weiteren eine Objekterkennungseinrichtung 1900 zum Erkennen von Objekten 20 in dem Fahrzeug 1 umfassen. Die Objekte 20 können beispielsweise Objekte sein, die nicht zum Fahrzeug gehören. Die Objekterkennungseinrichtung 1900 kann im Kofferraum des Fahrzeugs angeordnet sein. Die Steuereinrichtung 1100 ist derart ausgebildet, dass sie das Vorhandensein und den Zustand des Objekts 20 in dem Fahrzeug 1 auf der Anzeigeeinrichtung 1200 anzeigt, wenn die Steuereinrichtung 1100 feststellt, dass der ermittelte Zustand des Fahrzeugs 1 mit dem Zustand, der in dem Speicher 1510 gespeichert ist, übereinstimmt und/oder die ermittelte Position des Fahrzeugs 1 mit einer Position, die in dem Speicher 1520 gespeichert ist, übereinstimmt. Dadurch ist es beispielsweise möglich, dass in einem Begrüßungs-Menü angezeigt wird, dass im Fahrzeug kein Regenschirm vorhanden ist, wenn die Objekterkennungseinrichtung 1900 festgestellt hat, dass im Kofferraum des Fahrzeugs kein Regenschirm liegt und die Sensoreinrichtung 1400 feststellt, dass auf die Windschutzscheibe des Fahrzeugs Niederschlag auftrifft.

Gemäß einer weiteren Ausführungsform kann die Fahrzeugassistenzvorrichtung einen Sensor 2000 zum Ermitteln von Daten, die einen physischen und/oder psychischen Zustand des Fahrers kennzeichnen, umfassen. Der Sensor kann beispielsweise ein biometrischer Sensor sein, der im Innenspiegel des Fahrzeugs angeordnet ist und beispielsweise den Gesichtsausdruck des Fahrers zur Auswertung durch die Steuereinrichtung 1100 erfassen kann. Die Steuereinrichtung kann die anzuzeigenden Informationen in Abhängigkeit von dem ermittelten Zustand des Fahrers auswählen.

Sämtliche Daten, die von einer der externen Einrichtungen 2, ..., 10, von der Sensoreinrichtung 1400, von der Objekterkennungseinrichtung 1900 oder dem Sensor 2000 erzeugt werden, können der Steuereinrichtung zur Auswertung und zur Generierung von Informationen auf der Anzeigeeinrichtung 1200 in einer gemeinsamen Datenschnittstelle 2100 bereitgestellt werden. Somit stehen die Informationen unabhängig von ihrer Quelle dem System zur Verfügung.

### Bezugszeichenliste

- 1: Fahrzeug
- 2: Zentrale/Backend
- 3: Wohnung/Haus
- 4: Unternehmen/Arbeitsstätte
- 5: Hotel/Restaurant
- 6: Tankstelle
- 7: Geschäft
- 8: Dienstleistungsunternehmen des Personennahverkehrs
- 9: Parkplatz/Parkhaus
- 10: Taxi-/Mietwagenzentrale
- 100: Fahrzeugassistenzvorrichtung
- 1100: Steuereinrichtung
- 1200: Anzeigeeinrichtung
- 1300: Positionsbestimmungseinrichtung
- 1400: Sensoreinrichtung
- 1500: Speichereinrichtung
- 1600: Empfangseinrichtung
- 1700: Sendeeinrichtung
- 1800: Eingabeeinrichtung
- 1900: Objekterkennungseinrichtung
- 2000: Sensor
- 2100: Datenschnittstelle

## Patentansprüche

1. Fahrzeugassistenzvorrichtung, umfassend:
- eine Steuereinrichtung (1100) zum Steuern des Anzeigens von Informationen,
- eine Anzeigeeinrichtung (1200) zum Anzeigen der Informationen,
- eine Positionsbestimmungseinrichtung (1300) zum Ermitteln der Position eines Fahrzeugs (1),
- mindestens eine Sensoreinrichtung (1400) zum Feststellen eines Zustands des Fahrzeugs (1),
- eine Speichereinrichtung (1500) mit einem ersten Speicher (1510) zur Speicherung von Zuständen des Fahrzeugs (1) und mit einem zweiten Speicher (1520) zur Speicherung von Positionen,
- wobei die Steuereinrichtung (1100) derart ausgebildet ist, dass die Steuereinrichtung (1100) den ermittelten Zustand des Fahrzeugs (1) mit den in dem ersten Speicher (1510) gespeicherten Zuständen des Fahrzeugs (1) vergleicht und die ermittelte Position des Fahrzeugs (1) mit den in dem zweiten Speicher (1520) gespeicherten Positionen des Fahrzeugs (1) vergleicht,
- wobei die Steuereinrichtung (1100) derart ausgebildet ist, dass die Steuereinrichtung die Informationen auf der Anzeigeeinrichtung (1200) anzeigt, wenn die Steuereinrichtung feststellt, dass der ermittelte Zustand des Fahrzeugs (1) mit einem Zustand, der in dem ersten Speicher (1510) gespeichert ist, übereinstimmt und/oder die ermittelte Position des Fahrzeugs (1) mit einer Position, die in dem zweiten Speicher (1520) gespeichert ist, übereinstimmt,
- wobei die Steuereinrichtung (1100) erste der Informationen auf der Anzeigeeinrichtung (1200) anzeigt, wenn die Steuereinrichtung (1100) feststellt, dass sich der ermittelte Zustand des Fahrzeugs (1) von einem Zustand, der nicht in dem ersten Speicher (1510) gespeichert ist, in den Zustand, der in dem ersten Speicher (1510) gespeichert ist, verändert, und/oder wenn die Steuereinrichtung (1100) feststellt, dass sich die ermittelte Position des Fahrzeugs (1) von einer Position, die nicht in dem zweiten Speicher (1520) gespeichert ist, zu der Position, die in dem zweiten Speicher (1520) gespeichert ist, verändert,
- wobei die Steuereinrichtung (1100) zweite von den ersten Informationen verschiedene Informationen auf der Anzeigeeinrichtung (1200) anzeigt, wenn die Steuereinrichtung (1100) feststellt, dass sich der ermittelte Zustand des Fahrzeugs (1) von dem Zustand, der in dem ersten Speicher (1510) gespeichert ist, in den Zustand, der nicht in dem ersten Speicher (1510) gespeichert ist, verändert, und/oder wenn die Steuereinrichtung (1100) feststellt, dass sich die Position des Fahrzeugs von der Position, die in dem zweiten Speicher (1520) gespeichert ist, zu der Position, die nicht in dem zweiten Speicher (1520) gespeichert ist, verändert.

2. Fahrzeugassistenzvorrichtung nach Anspruch 1, umfassend:
- eine Empfangseinrichtung (1600) zum Empfangen von ersten Daten, die von einer externen Einrichtung (2, 3, 4, 5, 6, 7, 8, 9, 10) außerhalb des Fahrzeugs (1) bereitgestellt werden,
- wobei die Steuereinrichtung (1100) die ersten Daten auf der Anzeigeeinrichtung (1200) anzeigt, wenn die Steuereinrichtung (1100) feststellt, dass der ermittelte Zustand des Fahrzeugs (1) mit dem Zustand, der in dem ersten Speicher (1510) gespeichert ist, übereinstimmt und/oder die ermittelte Position des Fahrzeugs (1) mit der Position, die in dem zweiten Speicher (1520) gespeichert ist, übereinstimmt.

3. Fahrzeugassistenzvorrichtung nach Anspruch 2, umfassend eine Sendeeinrichtung (1700) zum Senden einer Anfrage an die externe Einrichtung (2, 3, 4, 5, 6, 7, 8, 9, 10) zum Senden der ersten Daten.

4. Fahrzeugassistenzvorrichtung nach einem der Ansprüche 1 bis 3,
wobei die Steuereinrichtung (1100) derart ausgebildet ist, dass die Steuereinrichtung zweite Daten, die von der Sensoreinrichtung (1400) bereitgestellt werden, auf der Anzeigeeinrichtung (1200) anzeigt, wenn die Steuereinrichtung (1100) feststellt, dass der ermittelte Zustand des Fahrzeugs (1) mit dem Zustand, der in dem ersten Speicher (1510) gespeichert ist, übereinstimmt und/oder die ermittelte Position des Fahrzeugs (1) mit der Position, die in dem zweiten Speicher (1520) gespeichert ist, übereinstimmt.

5. Fahrzeugassistenzvorrichtung nach einem der Ansprüche 1 bis 4, umfassend:
- eine Eingabeeinrichtung (1800) zum Programmieren der Steuereinrichtung (1100) zur Anzeige von dritten Daten, die den Zustand von Komponenten des Fahrzeugs (1) oder den Zustand von nicht zum Fahrzeug (1) gehörenden Objekten (20) oder den Zustand der Umgebung des Fahrzeugs (1) oder das Auftreten von Ereignissen kennzeichnen,
- wobei die Steuereinrichtung (1100) derart programmierbar ausgebildet ist, dass die Steuereinrichtung in Abhängigkeit von der Programmierung der Steuereinrichtung die dritten Daten auf der Anzeigeeinrichtung (1200) anzeigt, wenn die Steuereinrichtung (1100) feststellt, dass der ermittelte Zustand des Fahrzeugs (1) mit dem Zustand, der in dem ersten Speicher (1510) gespeichert ist, übereinstimmt und/oder die ermittelte Position des Fahrzeugs (1) mit der Position, die in dem zweiten Speicher (1520) gespeichert ist, übereinstimmt.

6. Fahrzeugassistenzvorrichtung nach einem der Ansprüche 1 bis 5,
wobei die Steuereinrichtung (1100) derart programmierbar ausgebildet ist, dass die Steuereinrichtung in Abhängigkeit von der Programmierung der Steuereinrichtung die Anzeige der ersten und/oder der zweiten Daten auf der Anzeigeeinrichtung (1200) unterdrückt, wenn die Steuereinrichtung (1100) feststellt, dass der ermittelte Zustand des Fahrzeugs (1) mit dem Zustand, der in dem ersten Speicher (1510) gespeichert ist, übereinstimmt und/oder die ermittelte Position des Fahrzeugs (1) mit der Position, die in dem zweiten Speicher (1520) gespeichert ist, übereinstimmt.

7. Fahrzeugassistenzvorrichtung nach einem der Ansprüche 1 bis 6, umfassend:
- eine Objekterkennungseinrichtung (1900) zum Erkennen von Objekten (20) in dem Fahrzeug (1), wobei die Objekte (20) nicht zum Fahrzeug zugehörige Komponenten sind,
- wobei die Steuereinrichtung (1100) derart ausgebildet ist, dass die Steuereinrichtung (1100) das Vorhandensein oder den Zustand des Objekts (20) in dem Fahrzeug (1) auf der Anzeigeeinrichtung (1200) anzeigt, wenn die Steuereinrichtung feststellt, dass der ermittelte Zustand des Fahrzeugs (1) mit einem Zustand, der in dem ersten Speicher (1510) gespeichert ist, übereinstimmt und/oder die ermittelte Position des Fahrzeugs (1) mit einer Position, die in dem zweiten Speicher (1520) gespeichert ist, übereinstimmt.

8. Fahrzeugassistenzvorrichtung nach einem der Ansprüche 1 bis 7, umfassend:
- einen Sensor (2000) zum Ermitteln eines physischen und/oder psychischen Zustands des Fahrers,
- wobei die Steuereinrichtung (1100) derart ausgebildet ist, dass die Steuereinrichtung die Informationen zum Anzeigen auf der Anzeigeeinrichtung (1200) in Abhängigkeit von dem ermittelten Zustand des Fahrers auswählt.

9. Fahrzeugassistenzvorrichtung nach einem der Ansprüche 5 bis 8, umfassend:
eine Schnittstelle (2100) zum Bereitstellen der ersten und/oder zweiten und/oder dritten Daten für die Steuereinrichtung (1100).

10. Fahrzeug, umfassend:
eine Fahrzeugassistenzvorrichtung (100) nach einem der Ansprüche 1 bis 9.

11. System zum Bereistellen von Daten für eine Fahrzeugassistenzvorrichtung in einem Fahrzeug, umfassend:
- ein Fahrzeug (1) nach Anspruch 10,
- eine bezüglich des Fahrzeugs externe Einrichtung (2) zum Bereitstellen von Informationen für die Fahrzeugassistenzvorrichtung (100) des Fahrzeugs (1),
- wobei die Einrichtung (2) zum Bereitstellen der Informationen eine Speichereinrichtung (200) zum Speichern von Daten aufweist,
- wobei die Einrichtung (2) zum Bereitstellen der Informationen eine Steuereinrichtung (210) zum Auswählen der Informationen aus den in der Speichereinrichtung (200) gespeicherten Daten aufweist,
- wobei die Steuereinrichtung (210) dazu ausgebildet ist, die Informationen aus den in der Speichereinrichtung (200) gespeicherten Daten in Abhängigkeit von dem von der Fahrzeugassistenzvorrichtung (100) ermittelten Zustand des Fahrzeugs (1) und/oder in Abhängigkeit von der von der Fahrzeugassistenzvorrichtung (100) ermittelten Position des Fahrzeugs (1) auszuwählen,
- wobei die Einrichtung (2) zum Bereitstellen der Informationen die Informationen an die Fahrzeugassistenzvorrichtung (100) des Fahrzeugs (1) sendet, wenn die Steuereinrichtung (1100) der Fahrzeugassistenzvorrichtung (100) eine Anfrage zum Senden der Informationen an die Einrichtung (2) zum Bereitstellen der Informationen gestellt hat.

12. System nach Anspruch 11, umfassend:
- mindestens eine bezüglich des Fahrzeugs externe Einrichtung (3, 4, 5, 6, 7, 8, 9, 10) zum Erzeugen der Informationen, wobei die Informationen einen Zustand der mindestens einen Einrichtung (3, 4, 5, 6, 7, 8, 9, 10) zum Erzeugen der Informationen kennzeichnen,
- wobei die mindestens eine Einrichtung (3, 4, 5, 6, 7, 8, 9, 10) zum Erzeugen der Informationen dazu ausgebildet ist, die Informationen an die Einrichtung (2) zum Bereitstellen der Informationen oder an die Fahrzeugassistenzvorrichtung (100) zu senden.

13. System nach Anspruch 12,
wobei die mindestens eine Einrichtung (3, 4, 5, 6, 7, 8, 9, 10) zum Erzeugen der Informationen ein Wohnhaus, ein öffentliches oder privates Unternehmen, ein Hotel/Restaurant, eine Tankstelle, ein Geschäft, ein Dienstanbieter des öffentlichen oder privaten Verkehrs, ein Parkplatz oder ein Parkhaus ist.

## Claims

1. A vehicle assistance device, comprising:
- a control means (1100) for controlling the displaying of information,
- a display means (1200) for displaying the information,
- a position-determining means (1300) for ascertaining the position of a vehicle (1),
- at least one sensor means (1400) for establishing a state of the vehicle (1),
- a storage means (1500) with a first memory (1510) for storing states of the vehicle (1) and with a second memory (1520) for storing positions,
- wherein the control means (1100) is designed in such a way that the control means (1100) compares the ascertained state of the vehicle (1) with the states of the vehicle (1) stored in the first memory (1510), and compares the ascertained position of the vehicle (1) with the positions of the vehicle (1) stored in the second memory (1520),
- wherein the control means (1100) is designed in such a way that the control means displays the information on the display means (1200) if the control means establishes that the ascertained state of the vehicle (1) matches a state which is stored in the first memory (1510), and/or the ascertained position of the vehicle (1) matches a position which is stored in the second memory (1520),
- wherein the control means (1100) displays first items of the information on the display means (1200) if the control means (1100) establishes that the ascertained state of the vehicle (1) changes from a state which is not stored in the first memory (1510) into the state which is stored in the first memory (1510), and/or if the control means (1100) establishes that the ascertained position of the vehicle (1) changes from a position which is not stored in the second memory (1520) to the position which is stored in the second memory (1520),
- wherein the control means (1100) displays second items of information, different from the first items of information, on the display means (1200) if the control means (1100) establishes that the ascertained state of the vehicle (1) changes from the state which is stored in the first memory (1510) into the state which is not stored in the first memory (1510), and/or if the control means (1100) establishes that the position of the vehicle changes from the position which is stored in the second memory (1520) to the position which is not stored in the second memory (1520).

2. A vehicle assistance device according to Claim 1, comprising:
- a receiving means (1600) for receiving first data which is provided by an external means (2, 3, 4, 5, 6, 7, 8, 9, 10) outside the vehicle (1),
- wherein the control means (1100) displays the first data on the display means (1200) if the control means (1100) establishes that the ascertained state of the vehicle (1) matches the state which is stored in the first memory (1510), and/or the ascertained position of the vehicle (1) matches the position which is stored in the second memory (1520).

3. A vehicle assistance device according to Claim 2, comprising a transmission means (1700) for transmitting a request to the external means (2, 3, 4, 5, 6, 7, 8, 9, 10) for transmitting the first data.

4. A vehicle assistance device according to one of Claims 1 to 3,
wherein the control means (1100) is designed in such a way that the control means displays second data which are provided by the sensor means (1400) on the display means (1200) if the control means (1100) establishes that the ascertained state of the vehicle (1) matches the state which is stored in the first memory (1510), and/or the ascertained position of the vehicle (1) matches the position which is stored in the second memory (1520).

5. A vehicle assistance device according to one of Claims 1 to 4, comprising:
- an input means (1800) for programming the control means (1100) for displaying third data which denotes the state of components of the vehicle (1) or the state of objects (20) not belonging to the vehicle (1) or the state of the surroundings of the vehicle (1) or the occurrence of events,
- wherein the control means (1100) is designed to be programmable in such a way that the control means, as a function of the programming of the control means displays the third data on the display means (1200) if the control means (1100) establishes that the ascertained state of the vehicle (1) matches the state which is stored in the first memory (1510), and/or the ascertained position of the vehicle (1) matches the position which is stored in the second memory (1520).

6. A vehicle assistance device according to one of Claims 1 to 5,
wherein the control means (1100) is designed to be programmable in such a way that the control means, as a function of the programming of the control means, suppresses the displaying of the first and/or second data on the display means (1200) if the control means (1100) establishes that the ascertained state of the vehicle (1) matches the state which is stored in the first memory (1510), and/or the ascertained position of the vehicle (1) matches the position which is stored in the second memory (1520).

7. A vehicle assistance device according to one of Claims 1 to 6, comprising:
- an object recognition means (1900) for recognising objects (20) in the vehicle (1), wherein the objects (20) are components not associated with the vehicle,
- wherein the control means (1100) is designed in such a way that the control means (1100) displays the presence or the state of the object (20) in the vehicle (1) on the display means (1200) if the control means establishes that the ascertained state of the vehicle (1) matches a state which is stored in the first memory (1510), and/or the ascertained position of the vehicle (1) matches a position which is stored in the second memory (1520).

8. A vehicle assistance device according to one of Claims 1 to 7, comprising:
- a sensor (2000) for ascertaining a physical and/or mental state of the driver,
- wherein the control means (1100) is designed in such a way that the control means selects the information for displaying on the display means (1200) as a function of the ascertained state of the driver.

9. A vehicle assistance device according to one of Claims 5 to 8, comprising: an interface (2100) for providing the first and/or second and/or third data for the control means (1100).

10. A vehicle, comprising:
a vehicle assistance device (100) according to one of Claims 1 to 9.

11. A system for providing data for a vehicle assistance device in a vehicle, comprising:
- a vehicle (1) according to Claim 10,
- a means (2) which is external to the vehicle for providing information for the vehicle assistance device (100) of the vehicle (1),
- wherein the means (2) for providing the information has a storage means (200) for storing data,
- wherein the means (2) for providing the information has a control means (210) for selecting the information from the data stored in the storage means (200),
- wherein the control means (210) is designed to select the information from the data stored in the storage means (200) as a function of the state of the vehicle (1) ascertained by the vehicle assistance device (100) and/or as a function of the position of the vehicle (1) ascertained by the vehicle assistance device (100),
- wherein the means (2) for providing the information sends the information to the vehicle assistance device (100) of the vehicle (1) if the control means (1100) of the vehicle assistance device (100) has made a request to send the information to the means (2) for providing the information.

12. A system according to Claim 11, comprising:
- at least one means (3, 4, 5, 6, 7, 8, 9, 10) which is external to the vehicle for generating the information, wherein the information denotes a state of the at least one means (3, 4, 5, 6, 7, 8, 9, 10) for generating the information,
- wherein the at least one means (3, 4, 5, 6, 7, 8, 9, 10) for generating the information is designed to send the information to the means (2) for providing the information or to the vehicle assistance device (100).

13. A system according to Claim 12,
wherein the at least one means (3, 4, 5, 6, 7, 8, 9, 10) for generating the information is a residential house, a public or private company, a hotel/restaurant, a petrol station, a shop, a service provider for public or private transport, a car park or a multi-storey car park.

## Revendications

1. Dispositif d'assistance d'un véhicule comprenant :
- un dispositif de commande (1100) permettant de commander l'affichage d'informations,
- un dispositif d'affichage (1200) permettant d'afficher les informations,
- un dispositif de détermination de position (1300) permettant d'évaluer la position d'un véhicule (1),
- au moins un dispositif de capteur (1400) permettant de déterminer l'état du véhicule (1),
- un dispositif de mémoire (1500) équipé d'une première mémoire (1510) permettant d'enregistrer des états du véhicule (1) et une seconde mémoire (1520) permettant d'enregistrer des positions,
- le dispositif de commande (1100) étant réalisé de sorte qu'il compare l'état du véhicule (1) évalué avec les états du véhicule (1) enregistrés dans la première mémoire (1510) et compare la position du véhicule (1) évaluée avec les positions du véhicule (1) enregistrées dans la seconde mémoire (1520),
- le dispositif de commande (1100) étant réalisé de sorte qu'il affiche les informations sur le dispositif d'affichage (1200) lorsqu'il détermine que l'état du véhicule (1) évalué coïncide avec un état qui est enregistré dans la première mémoire (1510), et/ou que la position du véhicule (1) évalué coïncide avec une position qui est enregistrée dans la seconde mémoire (1520),
- le dispositif de commande (1100) n'affichant les informations sur le dispositif d'affichage (1200) que lorsqu'il détermine que l'état du véhicule (1) évalué passe d'un état qui n'est pas enregistré dans la première mémoire (1510) à l'état qui est enregistré dans la première mémoire (1510) et/ou lorsqu'il détermine que la position du véhicule (1) évaluée passe d'une position qui n'est pas enregistrée dans la seconde mémoire (1520) à la position qui est enregistrée dans la seconde mémoire (1520),
- le dispositif de commande (1100) affichant sur le dispositif d'affichage (1200) des secondes informations différentes des premières informations lorsqu'il détermine que l'état du véhicule (1) évalué passe de l'état qui est enregistré dans la première mémoire (1510) à l'état qui n'est pas enregistré dans la première mémoire (1510) et/ou lorsqu'il détermine que la position du véhicule passe de la position qui est enregistrée dans la seconde mémoire (1520) à la position qui n'est pas enregistrée dans la seconde mémoire (1520).

2. Dispositif d'assistance d'un véhicule conforme à la revendication 1, comprenant :
- un dispositif de réception (1600) permettant de recevoir des premières données qui sont fournies par un dispositif externe (2, 3, 4, 5, 6, 7, 8, 9, 10) situé à l'extérieur du véhicule (1),
- le dispositif de commande (1100) affichant les premières données sur le dispositif d'affichage (1200) lorsqu'il détermine que l'état du véhicule (1) évalué coïncide avec l'état qui est enregistré dans la première mémoire (1510) et/ou que la position du véhicule (1) évalué coïncide avec la position qui est enregistrée dans la seconde mémoire (1520).

3. Dispositif d'assistance d'un véhicule conforme à la revendication 2, comprenant :
un dispositif émetteur (1700) permettant de transmettre une demande au dispositif externe (2, 3, 4, 5, 6, 7, 8, 9, 10) pour transmettre les premières données.

4. Dispositif d'assistance d'un véhicule conforme à l'une des revendications 1 à 3,
dans lequel le dispositif de commande (1100) est réalisé de sorte qu'il affiche sur le dispositif d'affichage (1200) des secondes données qui sont fournies par le dispositif de capteur (1400) lorsqu'il détermine que l'état du véhicule (1) évalué coïncide avec l'état qui est enregistré dans la première mémoire (1510), et/ou que la position du véhicule (1) évaluée coïncide avec la position qui est enregistrée dans la seconde mémoire (1520).

5. Dispositif d'assistance d'un véhicule conforme à l'une des revendications 1 à 4,
comprenant :
- un dispositif d'entrée (1800) permettant de programmer le dispositif de commande (1100) pour permettre d'afficher des troisièmes données qui caractérisent l'état de composants du véhicule (1) ou l'état d'objets (20) n'appartenant pas au véhicule (1) ou l'état de l'environnement du véhicule (1) ou l'apparition d'événements,
- le dispositif de commande (1100) pouvant être programmé de sorte qu'il affiche les troisièmes données sur le dispositif d'affichage (1200) en fonction de sa programmation lorsqu'il détermine que l'état du véhicule (1) évalué coïncide avec l'état qui est enregistré dans la première mémoire (1510), et/ou que la position du véhicule (1) évaluée coïncide avec la position qui est enregistrée dans la seconde mémoire (1520).

6. Dispositif d'assistance d'un véhicule conforme à l'une des revendications 1 à 5,
dans lequel le dispositif de commande (1100) peut être programmé de sorte qu'il supprime, en fonction de sa programmation, l'affichage des premières données et/ou des secondes données sur le dispositif d'affichage (1200) lorsqu'il détermine que l'état du véhicule (1) évalué coïncide avec l'état qui est enregistré dans la première mémoire (1510), et/ou que la position du véhicule (1) évaluée coïncide avec la position qui est enregistrée dans la seconde mémoire (1520).

7. Dispositif d'assistance d'un véhicule conforme à l'une des revendications 1 à 6, comprenant :
- un dispositif de reconnaissance d'objets (1900) permettant de reconnaître des objets (20) dans le véhicule (1), les objets (20) n'étant pas des composants appartenant au véhicule,
- le dispositif de commande (1100) étant réalisé de sorte qu'il affiche sur le dispositif d'affichage (1200) la présence ou l'état de l'objet (20) dans le véhicule (1) lorsqu'il détermine que l'état du véhicule (1) évalué coïncide avec un état qui est enregistré dans la première mémoire (1510) et/ou que la position du véhicule (1) évaluée coïncide avec une position qui est enregistrée dans la seconde mémoire (1520).

8. Dispositif d'assistance d'un véhicule conforme à l'une des revendications 1 à 7, comprenant :
- un capteur (2000) permettant d'évaluer un état physique et/ou psychique du conducteur,
- le dispositif de commande (1100) étant réalisé de sorte qu'il sélectionne les informations à afficher sur le dispositif d'affichage (1200) en fonction de l'état du conducteur évalué.

9. Dispositif d'assistance d'un véhicule conforme à l'une des revendications 5 à 8, comprenant :
- une interface (2100) pour permettre de fournir les premières données et/ou les secondes données et/ou les troisièmes données pour le dispositif de commande (1100).

10. Véhicule comprenant un dispositif d'assistance (100) conforme à l'une des revendications 1 à 9.

11. Système permettant de fournir des données destinées à un dispositif d'assistance d'un véhicule, dans un véhicule comprenant :
- un véhicule (1) conforme à la revendication 10,
- un dispositif (2) externe au véhicule permettant de fournir des informations pour le dispositif d'assistance (100) du véhicule (1),
- le dispositif (2) permettant de fournir les informations comprenant un dispositif de mémoire (200) permettant d'enregistrer des données,
- le dispositif (2) permettant de fournir les informations comprenant un dispositif de commande (210) permettant de sélectionner les informations à partir des données enregistrées dans le dispositif de mémoire (200),
- le dispositif de commande (210) étant réalisé pour sélectionner les informations provenant des données enregistrées dans le dispositif de mémoire (200) en fonction de l'état du véhicule (1) évalué par le dispositif d'assistance du véhicule (100) et/ou en fonction de la position du véhicule (1) évaluée par le système d'assistance du conducteur (100),
- le dispositif (2) permettant de fournir les informations transmettant les informations au dispositif d'assistance (100) du véhicule (1) lorsque le dispositif de commande (1100) du dispositif d'assistance du véhicule (100) a demandé de transmettre les informations au dispositif (2) permettant de fournir les informations.

12. Système conforme à la revendication 11,
comprenant :
- au moins un dispositif externe au véhicule (3, 4, 5, 6, 7, 8, 9, 10) permettant d'obtenir les informations, les informations caractérisant un état du dispositif (3, 4, 5, 6, 7, 8, 9, 10) permettant d'obtenir les informations,
- le dispositif (3, 4, 5, 6, 7, 8, 9, 10) permettant d'obtenir les informations étant réalisé pour permettre de transmettre les informations au dispositif (2) permettant de fournir les informations ou au dispositif d'assistance du véhicule (100).

13. Système conforme à la revendication 12,
dans lequel le dispositif (3, 4, 5, 6, 7, 8, 9, 10) permettant d'obtenir les informations est une habitation, une entreprise publique ou privée, un hôtel / restaurant, une station-service, un magasin, un fournisseur de services, un transport public ou privé, un emplacement de stationnement ou un parking.
